# EUROPÄISCHE PATENTSCHRIFT

(11) **EP 1 568 463 B1**
(45) Veröffentlichungstag und Bekanntmachung des Hinweises auf die Patenterteilung: **21.03.2007**
(21) Anmeldenummer: 05002867.9
(22) Anmeldetag: 11.02.2005
(51) Int. Cl.: B29C 45/27

(54) **Werkzeugeinsatz mit zugehörigem Werkzeugteil für den Anschnitt einer Heisskanaldüse für eine Spritzgiessmaschine**
Tool insert with the associated tool component for the gate of a hot runner nozzle for an injection moulding machine
Elément d'outil avec pièce d'outil associée pour une entrée d'injection d'une buse à canal chaud pour une machine à mouler par injection

(30) Priorität: 28.02.2004 DE 102004009799
(43) Veröffentlichungstag der Anmeldung: 31.08.2005
(73) Patentinhaber: INCOE INTERNATIONAL, INC., D-63322 Rödermark (DE)
(72) Erfinder: Goinski, Michael, Dipl. Ing., 97222 Rimpar (DE)
(74) Vertreter: Boecker, Joachim

(56) Entgegenhaltungen:
- EP-A- 0 854 027
- WO-A-00/48814
- WO-A-01/02151
- WO-A-01/28750
- WO-A-03/086734
- DE-A1- 10 354 456
- US-A- 5 895 669
- US-B1- 6 220 850
- US-B1- 6 402 502
- PATENT ABSTRACTS OF JAPAN Bd. 1997, Nr. 11, 28. November 1997 (1997-11-28) -& JP 09 174612 A (VICTOR CO OF JAPAN LTD), 8. Juli 1997 (1997-07-08)

## Beschreibung

Die vorliegende Erfindung bezieht sich auf einen Werkzeugeinsatz mit zugehörigem Werkzeugteil für den Anschnitt einer Heißkanaldüse für eine Spritzgießmaschine gemäß dem Oberbegriff des Anspruches 1.

Beim Spritzgießen wird heiße Schmelze von einer Spritzgießmaschine entweder direkt oder über ein Heißkanalverteilersystem mittels einer Heißkanaldüse in das Werkzeug (Spritzform) eingespritzt. Das Werkzeug besteht aus einer die Heißkanaldüse aufnehmenden Spritzseite, in welcher sich in der Regel die Außenform (Kavität) des Kunststoffteils befindet, und einer Auswerferseite mit der Innenform (Kern). Der Bereich, in welchem die Heißkanaldüse an das Werkzeug und am Kunststoffteil anschließt, wird als "Anschnitt" bezeichnet. Der vordere, werkzeugseitige Teil der Heißkanaldüse mit dem Anschnittbereich steckt beim Spritzgießen in einer Ausnehmung des Werkzeugs. Im hinteren Bereich stützt sich die Düse axial am Heißkanalverteilerblock ab und ist mit dem vorderen Anschnittteil mittels Präzisionsdichtung im werkzeug fixiert. Dort ist die Düse starken mechanischen und thermischen Beanspruchungen ausgesetzt. Da der Anschnittbereich der Düse folglich einem schnellen Verschleiß unterliegt, ist er nicht als integrales Teil der Heißkanaldüse ausgebildet, sondern als ein austauschbarer werkzeugeinsatz.

Der Anschluß des Werkzeugeinsatzes an die Düse und an das Werkzeug kann in unterschiedlicher Weise ausgebildet sein. Je nach Lösung ist dabei der Arbeitsumfang für den Werkzeugmacher unterschiedlich. Außerdem spielt bei diesen Lösungen die notwendige thermische Trennung zwischen Düse und Werkzeug eine wichtige Rolle. Nach Abschluss des eigentlichen Spritzvorganges soll die ins Werkzeug eingespritzte Schmelze schnell erstarren, während die in der Düsenspitze zurückgehaltene Schmelze flüssig bleiben soll. Dies bedeutet, daß zwischen den beiden genannten Bereichen eine Temperaturdifferenz von etwa 200°C erreicht werden muß.

Eine bekannte Bauform des Werkzeugeinsatzes besteht darin, daß dieser in das vordere (werkzeugseitige) Ende des Düse einschraubbar ist. Diese Lösung erfordert vom Werkzeugmacher den geringsten Arbeitsaufwand. Er braucht lediglich die Düsenbohrmaße ins Werkzeug einzubringen und für den Anschnittbereich eine Paßbohrung vorzusehen. Der Nachteil dieser Lösung besteht zum einen darin, daß durch die Verschraubung des Werkzeugeinsatzes mit der Düse eine unerwünschte gute wärmeleitung vom Düsenschaft zur Front des Werkzeugeinsatzes stattfindet. Ein weiterer Nachteil dieser Lösung besteht darin, daß durch die Aufheizung des Heißkanalverteilerblocks, in welchen die Düsenschäfte eingeschraubt sind, und durch die Aufheizung der Düsen thermische Lageveränderungen auf die Düse einwirken, welche die genaue Position der Düsen und der mit ihr verschraubten werkzeugeinsätze in Bezug auf das Werkzeug negativ beeinflussen. Ein dritter Nachteil besteht dann, wenn die stirnseitige Berührungsfläche zwischen dem Werkzeugeinsatz und der Kavität des Werkzeugs nicht rotationssymetrisch ist, sondern beispielsweise schräg ausgebildet ist. In diesem Falle muß die Düse mit dem Werkzeugeinsatz in einer genauen Drehwinkellage um ihre Längsachse in die Paßbohrung des Werkzeug eingeführt werden. Dies ist mit Rücksicht auf die erforderliche feste verschraubung zwischen werkzeugeinsatz und Düse einerseits und Düsenschaft und Heißkanalverteilerblock andererseits bei der erneuten Montage nach erfolgter Demontage mit gleichen verschraubungs-Drehmomenten praktisch nicht erreichbar.

Aus der EP-A-854027 ist eine Anordnung bekannt, die mit der vorgenannten bekannten Lösung vergleichbar ist. Die Düse mit ihrer Düsenspitze besteht aus einem gut wärmeleitenden Material. Auf diese Düsenspitze wird eine Kappe aufgeschraubt, in die die Düsenspitze hineinragt. Um den Wärmefluß von der Düsenspitze zu der genannten Kappe und von dort zu dem Werkzeug möglichst klein zu halten, ist zwischen Düsenspitze und Düsenkappe ein diese beiden Teile voneinander trennendes Glied aus Isoliermaterial, beispielsweise mittels Verschraubung, eingefügt. Der Kontakt zum werkzeug besteht nur über eine kleine zylindrische Fläche am vordersten Ende der Werkzeugkappe.

Eine zweite bekannte Lösung besteht darin, anstelle eines separaten Werkzeugeinsatzes den Anschnittbereich direkt in das Werkzeug einzuarbeiten. Hierbei ist die Positionierung und die thermische Trennung in guter Weise realisierbar. Der Nachteil dieser Lösung besteht jedoch in dem hohen Fertigungsaufwand für den Werkzeugmacher. Dieser muß im Werkzeug Halbkugelflächen, Kegelflächen, Absätze und verschiedene Passungen einarbeiten. Ein weiterer Nachteil dieser Lösung besteht darin, daß bei verschleiß des Anschnittes die gesamte Spritzseite des Werkzeugs oder einzelne Kavitäten ausgetauscht beziehungsweise repariert werden müssen.

Bei einer dritten bekannten Lösung wird der Arbeitsaufwand des Werkzeugmachers gegenüber der genannten zweiten Lösung verringert, indem der Anschnitt durch einen Werkzeugeinsatz im Werkzeug hergestellt wird. Bei dieser Lösung ist die thermische Trennung gut, und eine bestimmte Drehwinkellage kann durch eine Drehsicherung erreicht werden. Bei verschleiß kann der werkzeugeinsatz einfach durch einen neuen Werkzeugeinsatz ersetzt werden. Der Arbeitsaufwand für den Werkzeugmacher ist aber auch bei dieser Lösung größer als bei der erstgenannten Lösung.

Der vorliegenden Erfindung liegt die Aufgabe zugrunde, einen Werkzeugeinsatz der eingangs genannten Art zu entwickeln, welcher so beschaffen ist, daß die vom Werkzeugmacher am Werkzeug vorzunehmenden Anschlußarbeiten einfach und gering sind, daß eine gute thermische Trennung zwischen Werkzeugeinsatz und Werkzeug erreicht wird und, wo erforderlich, eine vorgegebene Drehwinkellage des Werkzeugeinsatzes in exakter Weise einfach einstellbar ist und diese auch beim erneuten Einsetzen des Werkzeugeinsatzes problemlos reproduzierbar ist.

Zur Lösung dieser Aufgabe wird ein Werkzeugeinsatz mit zugehörigem Werkzeugteil gemäß dem Oberbegriff des Anspruches 1 vorgeschlagen, welcher erfindungsgemäß die im kennzeichnenden Teil des Anspruches 1 genannten Merkmale hat.

Weitere Ausgestaltungen der Erfindung sind in den abhängigen Ansprüchen genannt.

Der Werkzeugeinsatz gemäß der Erfindung vereinigt nicht nur die Vorteile der oben genannten drei bekannten Lösungen, sondern geht noch darüber hinaus. Für die Herstellung der Düsenbohrmaße braucht der Werkzeugmacher nur zwei Bohrungen und eine Passung in das Werkzeug einzubringen. Sie umfassen alle Arbeiten für die Düse und den werkzeugeinsatz. Die thermische Trennung ist optimal, und der werkzeugeinsatz kann bei Bedarf ausgebaut und in exakt der gleichen Drehwinkellage wieder eingebaut oder durch einen anderen Werkzeugeinsatz ersetzt werden. Soll aus irgendeinem Grunde derselbe oder ein anderer Werkzeugeinsatz in einer anderen Drehwinkelposition eingebaut werden, so können beim Einsetzen des Werkzeugeinsatzes in die Innenfläche der Aufnahmebohrung des Werkzeugs zusätzliche Führungsnuten eingeschnitten werden.

Anhand des in den Figuren gezeigten Ausführungsbeispiels der Erfindung soll diese näher erläutert werden. Es zeigen:
- Figur 1: ein in ein Werkzeug eingesetztes Ausführungsbeispiel eines werkzeugeinsatzes gemäß der Erfindung,
- Figur 2: den in Figur 1 gezeigten Werkzeugeinsatz während seines Einschiebens in die Aufnahmeausnehmung des Werkzeug.

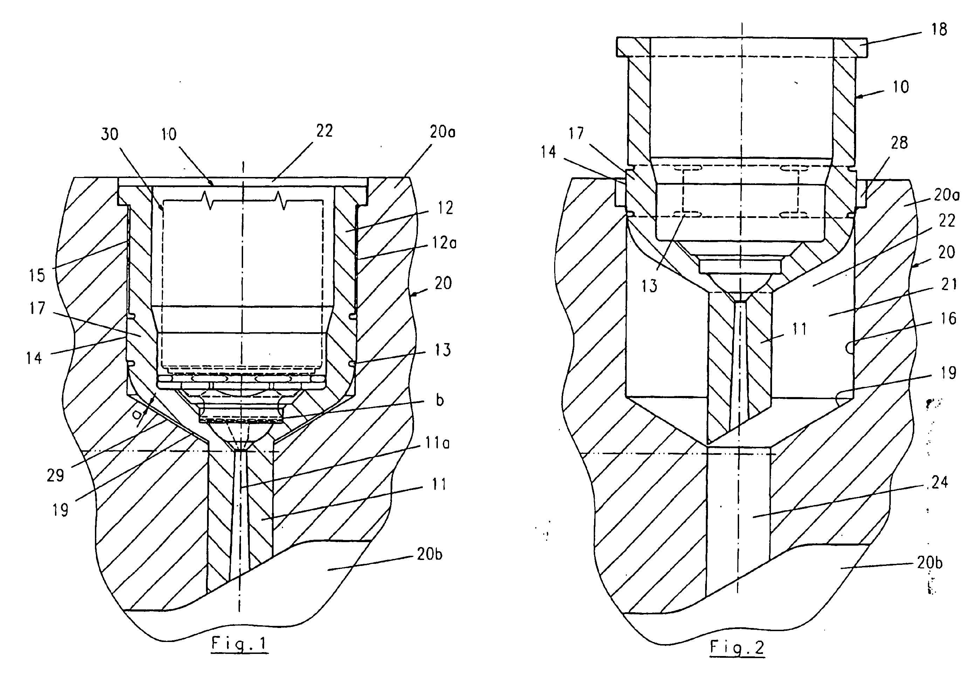

In Figur 1 ist mit 20 ein Ausschnitt aus der Spritzseite des Werkzeugs bezeichnet. Dabei bezeichnet 20a die Wand der Spritzseite des Werkzeugs und 20b die Kavität. Der werkzeugeinsatz 10 besteht aus einem zylindrischen Paßteil 11 mit Fließkanal 11a für die Schmelze und einem Aufnahmekopf 12 zur Aufnahme der gestrichelt angedeuteten Düse 30. Im Werkzeug selbst befindet sich eine Ausnehmung 21, die aus einer Paßbohrung 24 (Figur 2) zur Aufnahme des Paßteils 11 und einer Aufnahmebohrung 22 zur Aufnahme des Aufnahmekopfes 12 des werkzeugeinsatzes besteht. Die Dichtung zwischen Düse 30 und werkzeugeinsatz erfolgt über die in Figur 1 mit b bezeichneten Zylinderflächen von Düse 30 und Werkzeugeinsatz 10.

Das gezeigte Ausführungsbeispiel des Werkzeugeinsatzes ist an seiner an sich zylindrischen äußeren Mantelfläche 12a des Aufnahmekopfes 12 mit einem regelmäßigen Sechskant 17 versehen. Der Durchmesser dieses Sechskants zwischen zwei diametral gegenüber liegenden Ecken des Sechskants ist etwas größer als der Durchmesser der Aufnahmebohrung 22 des Werkzeugs. Dies bedeutet, daß beim erstmaligen Einsetzen des Werkzeugeinsatzes in die Werkzeug-Ausnehmung 21 die in Längsrichtung der Düse verlaufenden Eckkanten des Sechskantes in das Material der Werkzeugs eindringen und hierbei Führungsnuten 15 in die Wand 16 der Aufnahmebohrung 22 schneiden oder räumen. Zur Aufnahme der hierbei anfallenden Späne sind am achsial oberen und unteren Ende des Sechskants rillenförmige Ausnehmungen 13 in den Eckbereichen des Sechskants 17 vorhanden. Wird nach seiner Demontage ein solcher Werkzeugeinsatz wieder eingesetzt oder gegen einen neuen ausgetauscht, so ist die erforderliche Drehwinkellage durch die bereits eingeschnittenen Führungsnuten 15 exakt vorgegeben.

Die achsiale Endlage des werkzeugeinsatzes im Werkzeug wird bestimmt durch das Zusammenwirken eines Flansches 18 am vom Werkzeug abgewendeten Ende des Werkzeugeinsatzes und durch die Tiefe eines entsprechend bemessenen, erweiterenden Absatzes 28 am Eingang der Werkzeug-Ausnehmung 21. Diese Endlage ist so gewählt, daß bei Auflage des Flansches 18 auf dem erweiterten Absatz 28 ein gewisser Abstand a (Figur 1) zwischen dem stirnseitigen Bereich 19 des Werkzeugeinsatzes und dem Boden 29 der Aufnahmebohrung 22 vorhanden bleibt. Hierdurch wird einerseits eine gute thermische Trennung und andererseits eine statisch bestimmte Anlage des Werkzeugeinsatzes in der Werkzeug-Ausnehmung 21 erreicht.

Der Sitz zwischen dem Paßteil 11 und der zugehörigen Aufnahmebohrung 24 des Werkzeugs ist so fest, daß nach dem Eindringen des Paßteils 11 in die Aufnahmebohrung 24 ein Drehen des Werkzeugeinsatzes nicht mehr möglich ist.

Wenn der Übergang zwischen dem Paßteil 11 und der Kavität nicht rotationssymetrisch in Bezug auf die Längsachse der Heißkanaldüse ist, wie dies in den Figuren dargestellt ist, dann muß der Werkzeugeinsatz in einer definierten Drehwinkellage in der Werkzeug-Ausnehmung 21 positioniert werden. Aus diesem Grunde ist die achsiale Position des Sechskants 17 am werkzeugeinsatz so gewählt, daß beim Beginn des Schneidvorganges, also dann, wenn beim Einschieben des werkzeugeinsatzes in die Werkzeug-Ausnehmung 21 der Sechskant 17 den Boden des Absatzes 28 erreicht, das Paßteil 11 noch nicht in die zugehörige Aufnahmebohrung 24 eingedrungen ist. Dieser Einschiebeaugenblick ist in Figur 2 dargestellt. In dieser Situation kann der Werkzeugeinsatz ohne Schwierigkeiten in die gewünschte Drehwinkellage gedreht werden. Danach erfolgt das Eindrücken und das Schneiden der Führungsnuten 15.

Es versteht sich, daß der in den Figuren gezeichnete regelmäßigen Sechskant 17 durch irgendeinen anderer regelmäßigen oder unregelmäßigen Mehrkant ersetzt werden kann. Im Prinzip wird die erfinderische Idee bereits durch einen einzigen irgendwie ausgebildeten schneidfähige Vorsprung an der äußeren Mantelfläche 12a des Aufnahmekopf 12 verwirklicht, der in radialer Richtung eine Erstreckung aufweist, die größer ist als der Radius der Aufnahmebohrung 22 im Werkzeug 20, so daß er beim Einschieben des Werkzeugeinsatzes 10 in die Werkzeug-Ausnehmung 21 eine Führungsnut 15 in die Innenfläche 16 der Aufnahmebohrung 22 zu schneiden vermag.

Sind mehrere schneidfähige Vorsprünge 14 vorhanden, so sind diese vorzugsweise gleichmäßig über den Umfang des Aufnahmekopfes 12 verteilt angeordnet.

## Patentansprüche

1. Werkzeugeinsatz mit zugehörigem Werkzeugteil, welcher Werkzeugeinsatz (10) für den Anschnitt einer Heißkanaldüse für eine Spritzgießmaschine bestimmt ist und an den vorderen Teil der Heißkanaldüse anschließt und seinerseits in eine entsprechende Ausnehmung (21) des Werkzeugs (20) einsetzbar ist, **dadurch gekennzeichnet, daß** der Werkzeugeinsatz (10) aus einem vorderen zylindrischen Paßteil (11) mit Fließkanal (11a) und einem Aufnahmekopf (12) für die Düse (30) besteht, daß der Aufnahmekopf (12) an seiner an sich zylindrischen äußeren Mantelseite (12a) mit mindestens einem schneidfähigen Vorsprung (14) versehen ist, der in radialer Richtung eine Erstreckung aufweist, die größer ist als der Radius der im Werkzeug (20) für die Aufnahme des Aufnahmekopfes (12) des Werkzeugeinsatzes (10) vorgesehenen Aufnahmebohrung (22), und daß der schneidfähige Vorsprung (14) so beschaffen ist, daß er beim Einschieben des Werkzeugeinsatzes (10) in die genannte Aufnahmebohrung (22) des Werkzeug eine Führungsnut (15) in die Innenfläche (16) der Aufnahmebohrung (22) im Werkzeug zu schneiden vermag.

2. Werkzeugeinsatz mit zugehörigem werkzeugteil nach Anspruch 1, **dadurch gekennzeichnet, daß** mehrere schneidfähige vorsprünge (14) gleichmäßig über den Umfang des Aufnahmekopfes (12) verteilt sind.

3. Werkzeugeinsatz mit zugehörigem werkzeugteil nach einem der Ansprüche 1 oder 2, **dadurch gekennzeichnet, daß** mehrere schneidfähige Vorsprünge (14) **dadurch** gebildet werden, daß ein achsialer Abschnitt des Aufnahmekopfes (12) als Mehrkant (17) ausgebildet ist, wobei die radiale Erstreckung der Ecken des Mehrkants (17) größer ist als der Radius der im werkzeug (20) für die Aufnahme des Aufnahmekopfes (12) des Werkzeugeinsatzes (10) vorgesehenen Aufnahmebohrung (22), und daß die achsialen Kanten des Mehrkants die genannten schneidfähigen Vorsprünge (14) bilden.

4. Werkzeugeinsatz mit zugehörigem werkzeugteil nach Anspruch 3, **dadurch gekennzeichnet, daß** der Mehrkant (17) ein regelmäßiger Sechskant ist.

5. Werkzeugeinsatz mit zugehörigem werkzeugteil nach einem der vorhergehenden Ansprüche, **dadurch gekennzeichnet, daß** die achsiale Position der schneidfähigen Vorsprünge (14) so gewählt ist, daß beim Einschieben des Werkzeugeinsatzes (10) in die Aufnahmebohrung (22) für den Aufnahmekopf (12) des Werkzeugeinsatzes (10) der Schneidvorgang beginnt, bevor das zylindrische Paßteil (11) in die zugehörige Aufnahmebohrung (24) im Werkzeug (20) eindringt.

6. Werkzeugeinsatz mit zugehörigem werkzeugteil nach einem der vorhergehenden Ansprüche, **dadurch gekennzeichnet, daß** die achsiale Endlage des Werkzeugeinsatzes (10) in der Werkzeug-Ausnehmung (21) durch das Zusammenwirken eines Flansches (18) am vom Werkzeug abgewendeten Ende des Werkzeugeinsatzes (10) mit einem entsprechenden erweiternden Absatz (28) am Eingang der Werkzeug-Ausnehmung (21) bestimmt wird.

7. Werkzeugeinsatz mit zugehörigem werkzeugteil nach Anspruch 6, **dadurch gekennzeichnet, daß** die genannte achsiale Endlage so gewählt ist, daß der zum Werkzeug gerichtete stirnseitige Bereich (19) des Aufnahmekopfes (12) den Boden (29) der Aufnahmebohrung (22) nicht berührt (Abstand a).

## Claims

1. Tool insert with associated tool part, which tool insert (10) is meant for the gate of a hot channel bushing of an injection molding machine and which tool insert (10) adjoins the front portion of the hot channel bushing and, in its turn, is insertible into a corresponding recess (21) of the tool (20), **characterized in that** the tool insert (10) consists of a frontal cylindrical fitting portion (11) with a passageway (11a) and a reception head (12) for the bushing (30), that the reception head (12) is provided on its generally cylindrical outer lateral area (12a) with at least one cutting projection (14) the radial extension of which is larger than the radius of the reception hole (22) provided in the tool (20) for the reception of the reception head (12), and that the cutting projection (14) is adapted such as to be able to cut a guiding slot (15) into the inner surface (16) of the reception hole (22) of the tool when the tool insert (10) is pushed into said reception hole (22) of the tool.

2. Tool insert with associated tool part according to claim 1, **characterized in that** a plurality of cutting projections (14) are uniformly distributed along the circumference of the reception head (12).

3. Tool insert with associated tool part according to any of claims 1 or 2, **characterized in that** a plurality of cutting projections (14) are formed by forming an axial section of the reception head (12) as a polygonal body (17) with the radial extension of the edges of the polygonal body (17) being larger than the radius of the reception hole (22) provided in the tool (20) for the reception of the reception head (12) of the tool insert (10), and that the axially extending edges of the polygonal body form said cutting projections (14).

4. Tool insert with associated tool part according to claim 3, **characterized in that** said polygonal body (17) is a regular hexagonal body.

5. Tool insert with associated tool part according to any of the preceding claims, **characterized in that** the axial position of the cutting projections (14) is selected in such a way that, when pushing the tool insert (10) into the reception hole (22) for the reception head (12) of the tool insert (10), the cutting process begins before the cylindrical fitting portion (11) enters the respective reception hole (24) in the tool (20).

6. Tool insert with associated tool part according to any of the preceding claims, **characterized** i**n that** the final axial position of the tool insert (10) in the tool recess (21) is defined by the cooperation of a flange (18) at that end of the tool insert (10) which faces away from the tool and a correspondingly enlarged shoulder (28) at the entrance of the tool recess (21).

7. Tool insert with associated tool part according to claim 6, **characterized in that** said final axial position is selected in such a way that the tool-facing end surface area (19) of the reception head (12) does not get in contact with the bottom (29) of the reception hole (22) (distance a).

## Revendications

1. Élément insérable d'outil pourvu d'une partie d'outil correspondante, lequel élément insérable d'outil (10) est destiné à l'entrée d'une buse de canal chaud pour une machine à injecter et se raccorde à la partie antérieure de la buse de canal chaud et peut pour sa part être inséré dans une cavité (21) correspondante de l'outil (20), **caractérisé**
**en ce que** l'élément insérable d'outil (10) comprend une pièce d'ajustage (11) cylindrique, avant, munie d'un canal de coulée (11a) et une tête de réception (12) de la buse (30),
**en ce que**, sur le côté latéral (22a) extérieur en soi cylindrique, la tête de réception (12) est munie d'au moins une saillie (14) capable de couper, dont l'étendue en direction radiale est supérieure au rayon du perçage de réception (22) prévu dans l'outil (20) pour recevoir la tête de réception (12) de l'élément insérable d'outil (10) et en ce que la saillie (14) capable de couper est conçue de telle manière que, quand on insère l'élément insérable d'outil (10) dans ledit perçage de réception (22) de l'outil, elle puisse couper une rainure de guidage (15) dans la surface intérieure (16) du perçage de réception (22) dans l'outil.

2. Élément insérable d'outil pourvu d'une pièce d'outil correspondante selon la revendication 1, **caractérisé en ce que** plusieurs saillies (14) capables de couper sont réparties régulièrement sur le pourtour de la tête de réception (12).

3. Élément insérable d'outil pourvu d'une pièce d'outil correspondante selon l'une des revendications 1 ou 2, **caractérisé en ce que** plusieurs saillies (14) capables de couper sont formées du fait qu'un segment axial de la tête de réception (12) est un polygone (17), l'étendue radiale des sommets du polygone (17) étant supérieure au rayon du perçage de réception (22) prévu dans l'outil (20) pour recevoir la tête de réception (12) de l'élément insérable d'outil (10), et **en ce que** les bords axiaux du polygone forment lesdites saillies (14) capables de couper.

4. Élément insérable d'outil pourvu d'une pièce d'outil correspondante selon la revendication 3, **caractérisé en ce que** le polygone (17) est un hexagone régulier.

5. Élément insérable d'outil pourvu d'une pièce d'outil correspondante selon l'une des revendications précédentes, **caractérisé en ce que** la position axiale des saillies (14) capables de couper est choisie de telle manière que, quand on insère l'élément insérable d'outil (10) dans le perçage de réception (22) pour la tête de réception (12) de l'élément insérable d'outil (10), l'opération de coupe commence avant que la pièce d'ajustage (11) cylindrique ne pénètre dans le perçage de réception (24) correspondant dans l'outil (20).

6. Élément insérable d'outil pourvu d'une pièce d'outil correspondante selon l'une des revendications précédentes, **caractérisé en ce que** la position axiale finale de l'élément insérable d'outil (10) dans la cavité (21) de l'outil est déterminée du fait qu'une collerette (18) à l'extrémité - détournée de l'outil - de l'élément insérable d'outil (10) coopère avec un épaulement (28) élargi correspondant de l'entrée de la cavité (21) de l'outil.

7. Élément insérable d'outil pourvu d'une pièce d'outil correspondante selon la revendication 6, **caractérisé en ce que** la position finale axiale est choisie de telle manière que la zone (19) frontale - orientée vers l'outil - de la tête de réception (12) ne touche pas (intervalle a) le fond (29) du perçage de réception (22).
